Europäisches Patentamt

European Patent Office

Office européen des brevets

(11) Publication number: **0 554 650 A1**

# EUROPEAN PATENT APPLICATION

(21) Application number: 92870020.2

(22) Date of filing: 04.02.92

(51) Int. Cl.5: **A23F 5/08**

(43) Date of publication of application:
**11.08.93 Bulletin 93/32**

(84) Designated Contracting States:
**AT BE CH DE DK ES FR GB GR IT LI LU NL PT SE**

(71) Applicant: **THE PROCTER & GAMBLE COMPANY**
**One Procter & Gamble Plaza**
**Cincinnati Ohio 45202(US)**

(72) Inventor: **Cavazzuti, Roberto**
**Via Ivanoe Amoretti 45/3**
**I-18100 Imperia(IT)**
Inventor: **Annibali, Daniele**
**Via Francesco Caraccioco 27**
**I-00192 Roma(IT)**

(74) Representative: **Canonici, Jean-Jacques et al**
**Procter & Gamble European Technical**
**Center N.V. Temselaan 100**
**B-1853 Strombeek-Bever (BE)**

(54) **Fine - ground coffee.**

(57) The present invention relates to roast and ground coffee having an unsurpassed flavour strength by grinding the coffee to a median particle size in the range of 195 to 240 micrometers. In particular, the present invention relates to coffees useful in automatic espresso machines, including domestic automatic espresso machines, having a narrow particle size distribution.

FIGURE 1

EP 0 554 650 A1

The present invention relates to roast and ground coffee having an unsurpassed flavour strength by grinding the coffee to a median particle size in the range of 195 to 240 micrometers. In particular, the present invention relates to coffees useful in automatic espresso machines, including domestic automatic espresso machines, having a narrow particle size distribution.

Background of the invention

The consumption of coffee as a beverage in hot and cold form is wide spread and many varieties are known and commercially available. The differences found in coffee beverages depend on a number of variables. Green coffee beans, being the raw material, are available in many flavours and qualities and are often blended to provide the desired coffee taste characteristic. Also, roasting of coffee, which is necessary to prepare the green beans for extraction, has a major effect on the final coffee beverage. Roasted coffee beans are ground into particles to prepare them for the extraction and brewing of the coffee beverage. The grinding of roasted coffee beans as well as the extraction or brewing method or equipment used for brewing are further critical variables determining characteristics of coffee beverages. The present invention provides a roast and ground coffee for brewing a coffee beverage which has an unsurpassed flavour strength, which is one of the most desired characteristics particularly for coffee beverages known as espresso coffee. The term "espresso coffee" herein encompasses the various strong coffee beverages also known as French coffee, Italian coffee, Turkish coffee and similar so called "strong" coffee beverages known in the art.

It has long been known that finer grinding of particles of roast and ground coffee provides an increased extraction surface. It was therefore believed that flavour and aroma components in the coffee beverage continue to increase with the reduction of particle size of the roast and ground coffee. In "Coffee Processing Technology", volumes 1 and 2 by M. Sivietz and H.E. Footer, the AVI Publishing Company, Inc., Westport, Connecticut, USA, 1963, the smallest particle size mentioned for fine ground coffee, for example for Italian espresso, is 380 micrometers. European Patent Application EP-A-47288 also recognizes that too large coffee particles reduce the extraction efficiency and therefore suggests to grind coffee to particle sizes of less than 420 micrometers. However, in order to allow use of commercial drip coffee brewing equipment and not alter the habits of those preparing the coffee beverage, EP-A-47288 teaches to attach the fine particles to larger inert granules for example to cellulose.

European Patent Application EP-A-242493 also suggests that the finer the coffee particles are, the stronger the coffee beverage brewed from such particles will be. This is in line with the teaching of "Coffee Processing Technology", supra, but no particular particle sizes are suggested.

In an attempt to reduce particle size of ground coffee in order to further improve the flavour strength, and which has found wide-spread use for roast and ground coffees to be used in drip coffee makers, is the flaking of ground coffee. US Patents 4,331,696, 4,591,508 and 5,064,676 as well as European patent application EP-A-405649 disclose ground coffee particles which are flaked to a certain thickness. However, the particle size ranges disclosed in either of these publications and their teaching does not provide relevant information for the present invention of a selected median particle size range for improved flavour strength of the resulting coffee beverage.

Brewing methods and machines which are used for the preparation of coffee beverages for immediate consumption either domestically or commercially in public places, for example in restaurants and bars, can be grouped into two categories. These are firstly drip machines, which are used most frequently for mild coffee, and mocha-pots, which are used most frequently in French and Italian domestic coffee making. In the second category are commercial automatic espresso machines (for example for restaurants) and domestic automatic espresso machines which enjoy increasing popularity. One essential difference between both categories is the pressure with which hot water or steam is flowing through the bed of coffee particles. Drip coffee machines work with a pressure head above a bed of coffee particles equivalent to not more than 5 to 10 cm of water. The extraction time is relatively long since the water flows only by gravity. In mocha-pots, a pressure of about 200 kPa raises hot water or steam through a bed of coffee particles. Commercial automatic espresso machines use pressures up to 1000 kPa to press hot steaming water through the coffee particles. The domestic automatic espresso machines are operating above the pressures found in mocha-pots. Depending on their design they operate between 300 kPa and 900 kPa.

The pressure used in the respective brewing method has a strong influence on the particle size that can be used. Given a certain brewing method or machine the particle size of the roast and ground coffee must be adjusted to provide desired brewing time and temperature which in turn influence finished coffee beverage characteristics like for example flavour strength. Therefore it is usual to grind coffee for drip coffee machines to a median particle size from 500 up to 2000 micrometers. For mocha-pots median particle sizes of about 300 to 400 micrometers are usual. For commercial automatic espresso machines or domestic automatic espresso machines ground coffee having a median, particle size as small as 240 micrometers are available.

Finer particles, even so said to be desirable for providing increased flavour strength, have not been attempted to be used with any of the respective brewing methods due to several problems. For example, it has been indicated that the resulting coffee beverage could have objectionable sedimentation or even a "sandy-flavour" appearance. Additional issues resulting from finer grinding like energy consumption and air pollution during production, oiliness, faster staling of the ground coffee and changes possibly required to coffee consumer habits have kept coffee suppliers from moving below the known particle sizes for ground coffee, especially since no alternative particle size had been suggested anywhere as advantageous.

Also, the particle size distribution, that is the amount of particles being larger or smaller than the median particle size was not considered to be controllable in an efficient way when reducing particle size. However, it has now been found that flavour strength does not simply continue to increase with reduced particle size and that a median particle size in the range of 195 to 240 micrometers provides an increased flavour strength for the coffee beverage. Also surprisingly, the particle size distribution of finer ground coffee has not been found to cause the anticipated problems.

It is therefore an objective of the present invention to provide roast and ground coffee having a median particle size in a narrow range resulting in an optimized, that is maximized, coffee beverage flavour strength. It is an additional objective of the present invention to provide ground coffee having a narrow particle size distribution.

Another objective of the present invention is to provide roast and ground coffee having a particle size which does not cause pressure drop problems with usual domestic automatic espresso machines or commercial automatic espresso machines. It is an additional objective to provide roast and ground coffee having a particle size and a particle size distribution which does not cause sedimentation in the coffee beverages prepared by domestic automatic espresso machines or commercial automatic espresso machines.

These and other objectives of the present invention will become more apparent in the following detailed description.

### Summary of the invention

The present invention relates to roast and ground coffee having a median particle size in the range of 195 to 240 micrometers, preferably in the range of 200 to 240 micrometers and most preferred in the range of 205 to 215 micrometers. In particular, the present invention relates to roast and ground coffee having the above median particle sizes and preferably a particle size distribution such that 80% by weight of the coffee has a particle size in the range from 25 to 395 micrometers.

In another aspect, the present invention relates to the use of roast and ground coffee according to the above indicated particle size and particle size distribution in a domestic automatic espresso machine.

### Detailed description of the invention

### Definitions

The following terms are used throughout the specification in the definition given below unless otherwise specified.

Ground coffee shall mean dry, particulate coffee which has been roasted and ground in preparation for its usage. The longer term "roast and ground coffee" may also be used.

Coffee beverage shall mean an aqueous beverage which comprises water extractable compounds of roast and ground coffee including colloidal suspended and floating solids.

Particle size shall mean the size of a single particle of ground coffee as measured by the laser diffraction method described below.

Median particle size of ground coffee shall mean that size for which half of the weight of the ground coffee has a particle size which is smaller than the median particle size and for which the other half of the weight of the ground coffee has a particle size which is larger than flavour strength.

### Brief description of the drawing

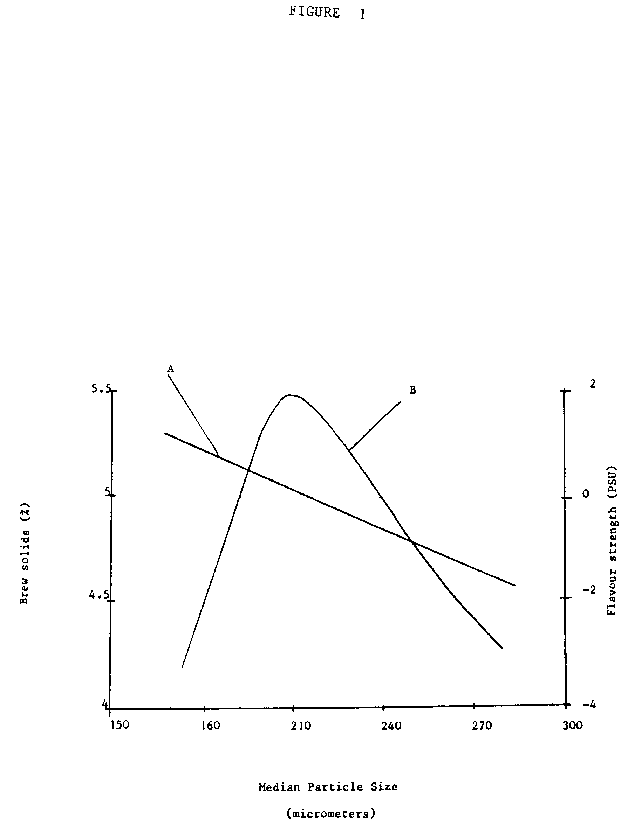

Figure 1 shows two curves A and B. Curve A shows the linear relation between the median particle size and the brew solids size. Curve B shows the relation between median particle size and flavour strength.

Detailed description of the invention

Coffee raw material/roasting of coffee beans :

Coffee raw materials are the green coffee beans. Green coffee beans as an agricultural product are available in a variety of flavours and qualities and are usually blended together to maintain a constant characteristic in the final coffee beverage. Typical varieties are for example Arabica and Robusta coffee beans. Each variety in turn has different kinds which are distinguished within each variety by country of origin and quality. According to the present invention, it has been found that a mixture of Arabica and Robusta in a ratio of 50% by weight of Arabica and 50% by weight Robusta provides satisfactory results. However, the mixture of coffee varieties, kinds and qualities strongly depends on the desired taste effect and therefore is non-relevant to the present invention.

Green coffee beans are prepared for roasting by a number of processes like drying, cleaning, eliminating of foreign material like sand, stones, sticks and so forth which are often found in the coffee raw material. After these preparations, the coffee is roasted by any of the well-known roasting methods with commercially available roasting equipment. A particular method of green bean preparation and roasting has been disclosed in European Patent Application EP-A-405 649. Also, volumes 1 and 2 of "Coffee processing technology", supra, and "Coffee technology" M. Sivietz, published by AVI Publishing Company, Inc. West Port, Connecticut, USA , 1979, disclose useful methods and equipment for green coffee bean preparation as well as coffee bean roasting.

Final roasting as indicated in above disclosures is often characterized by the colour of the roasted bean. The coffee beans can be roasted to any desired roast colour. Darker roasts develop stronger flavours which is in line with the objective of the present invention. The Hunter "L" colour system is generally used to define the colour of the coffee beans and the degree to which they have been roasted. A complete technical description of the Hunter "L" colour system can be found in an article by R.S. Hunter "Photoelectric colour difference meter", Journal of the optical society of America, 48, 985-95 (1958). For the present invention, roast coffee beans having a Hunter "L" colour between 12 and 20, preferably from about 15 to about 18 have been found to provide the desired flavour and taste characteristics. Roasted coffee in these colour ranges have also been termed Italian, French or Vienna roasts.

Grinding of the roasted coffee :

Since the present invention derives benefits from the particle size and particle size distribution of the roast and ground coffee, the grinding of the roast coffee is particularly important. Grinding of coffee has been exhaustively described in "Coffee processing technology" volumes 1 and 2, supra. Grinding equipment is available in many different sizes. Examples of commercial size grinding equipment are Probat Grinders by Probat-Werke, Emmerich, Germany, Vittoria grinders by Officine-Vittoria, Bologna, Italy or Buhler grinders by Buhler Miac, Uzwil, Switzerland. Grinding equipment using 2 or 3 grinding steps is preferred.

After grinding the coffee is usually normalized which is a well-known method to colour remaining coffee silverskin, also termed chaff and to break any remaining harsh or sharp edges of the coffee particles by interparticle friction.

Particle size and particle size distribution of ground coffee :

According to the present invention roast and ground coffee has a median particle size in the range of 195 to 240 micrometers, preferably from 200 to 240 micrometers and most preferred from 205 to 215 micrometers.

The median particle size of ground coffee can be measured by a variety of methods. Historically, the sieving method in which an amount of coffee was sieved through a stack of 3-8 sieves which had from top to bottom consecutively finer sieve sizes, was used. However, it is preferred to use improved measurement methods for determining the median particle size and particle size distribution of ground coffee. To determine particle size and particle size distribution for the present invention, a laser diffraction measurement has been used. For example, the Rodos-Helos laser diffraction system, by Sympatec GmbH, Remmlingen, Germany, has been found to provide satisfactory results which are accurate and repeatable for the median particle size.

Measuring the particle size distribution of roast and ground coffee by the sieving method is time consuming and does not provide very accurate and repeatable results. It is preferred to use the laser diffraction method. In order to obtain detailed particle size distribution information, a fine grid of particle size ranges has to be measured. This would allow scientific analysis of the distribution curve for example in relation to normal distributions. However, it has been found sufficient to judge the particle size distribution by its spread or width for the 80% by weight fraction around the median particle size. Therefore ground coffee according to the present invention preferably has a particle size distribution such that 80% of the weight of the ground coffee has a particle size in the range of 25 to 395 micrometers.

Brewing of coffee beverages :

Since the advantage of the present invention is an increased flavour strength for coffee, beverages brewing methods, such as the aforementioned drip coffee machines, using low pressure and large quantities of water for extraction of coffee flavours are not desirable when using the roast and ground coffee according to the present invention. Also mocha-pots, although they have not been found to cause percolation problems during the coffee brewing, are not optimal due to their low pressure.

According to the present invention, it is therefore preferred to use the roast and ground coffee having a median particle size in the range of 195 to 240 micrometers in high pressure coffee machines like the above mentioned domestic automatic espresso machines or commercial automatic espresso machines which are used for example in restaurants. Typical domestic automatic espresso machines are for example of the type "Espresso" or "Baby", by Gaggia in Robecco, S/Naviglio, Italy or of the type "Family", by Faema, Rome, Italy. Commercial automatic espresso machines are also available from the Gaggia or Faema.

Flavour strength and brew solids :

Flavour strength is a subjective taste impression of a coffee beverage. However a panel of expert tasters can measure flavour strength very accurate and repeatable. A typical flavour strength measurement would compare two coffee beverages, and provide a relative strength measurement. This quantitative relative strength is widely used and well known in the art. The scale for judging the relative flavour strength is incremental and given as positive or negative values for stronger flavour or milder flavour respectively. The absolute numerical values are assigned according to the following list.
- 0 represents no differences between the two coffees for the specific attributes;
- 0.1 represents little differences between the two coffees for the specific attributes;
- 0.2 represents moderate difference between the two coffees for the specific attributes;
- 0.5 represents moderately big difference between the two coffees for the specific attributes;
- 1.5 represents very big difference between the two coffees for the specific attributes.
Intermediate values are allowed

An absolute value for flavour strength as a quantitative measurement is not given since it depends on the individual and therefore subjective taste preference. However, there have been trends identified in preferential flavour strength desires in particular regional areas. For example, in France and Southern Europe including in particular Italy, so called strong coffee flavours are preferred and identified by the consumer as an indicator of good coffee quality. On the other hand, mild coffee flavours have been the general preference, for example in the Northern European countries or North America.

The term "brew solids" refers to the amount of solid residue of a coffee beverage after evaporating of the water. Brew solids do not give a direct measurement of coffee strength. However, they have been used as an indicator for flavour strength of coffee beverages as well as an indicator of coffee extraction efficiency. Brew solids are measured as weight percent of the coffee beverage after evaporating of the water. Comparisons between different brew solid percentages have to be based on equal amounts of extraction water and ground coffee in order to be an indicator for flavour strength. Using brew solids as indicator when comparing extraction efficiency is only meaningful if the measured brew solids are based on equal amounts of ground coffee. Ordinarily it is believed that increased amounts of brew solids indicates increased flavour strength and increased extraction efficiency.

Other factors influencing flavour strength as well as the taste panel test method, for flavour strength and the importance of brew solids are well known in the art and have been described for example in "Coffee processing technology", supra. All testing has to be considered after a statistical analysis to ensure repeatable results.

Examples :

LASER DIFFRACTION MEASUREMENT OF PARTICLE SIZE

As indicated above, the particle size measurement is critical in determining the present invention. The selected method for particle size measurement is the laser diffraction measurement. The principle measurement steps are to create a aerosol of a known volume and quantity of ground coffee. Then a laser beam is sent through that aerosol and an optical system onto a detector. The detector measures the diffraction pattern created by the particle size distribution in the aerosol. By comparison with known particle size distributions, a direct reading of the particle size distribution, and with the aid of modern computing equipment, the median particle size can be obtained. The above mentioned Rodos-Helos laser particle size distribution measurement system has been found to provide satisfactory results when used according to its operating instructions.

Example 1 and 2:

A blend of green coffee beans containing 50% Arabica (selected from the quality Kenia AB, Peru Nicu, Haiti 5X, Brasil class BNY4) and 50% Robusta (selected from the qualities Ivory Coast GR1, Madagascar/Zaire (washed)) are roasted to a Hunter L colour of 15.4. 5 kg of the green coffee blend was roasted in a laboratory roaster, Mini Turbo Roaster RT-3-Sy by Maschinenfabrik Ferdinand Gothot, Emmerich, Germany. Roasting time was approximately 3 minutes. At the end of the roasting the hot beans are quenched with 0.75 l of clean water. The resulting roast coffee was allowed to cool to about room temperature and transferred to a coffee grinder of the type UW2O1 by Probat Werke, Emmerich, Germany, which has a two step grinding system and a variable setting to influence particle size. Alternatively, a grinder of the type NS6 by Officiene Vittoria, Bologna, Italy can also be used. For example 1 according to the prior art, 2.5 kg of the roast coffee was ground at such a setting to result in a median particle size of 240 micrometers. The other 2.5 kg were ground to a median particle size of 210 micrometers for example 2 according to the present invention. After grinding, each example of roast and ground coffee was normalized.

For evaluating the flavour strength and other characteristics the roast and ground coffee of example 1 and example 2 were used to prepare coffee beverages. For each cup of coffee beverage 5-7 g of roast and ground coffee but always the same amount is used. The coffee beverage is prepared by using one of the above mentioned domestic automatic espresso machines according to the manufacturer's instructions to result in an amount of 45 ml of coffee beverage. This is repeated for each example often enough and evaluated according to general statistical test principles.

The result of the evaluation was that the coffee of example 2, according to the invention, provided a superb flavour strength relative to the coffee of example 1 according to the prior art. The coffee beverage prepared with the roast and ground coffee of example 1 and 2 had no differences in sedimentation of coffee grounds in the coffee beverage or percolation problems in any of the domestic automatic espresso machines used for preparing the coffee beverage.

Results of detailed analysis of the particle size distribution of example 1 and 2 by use of the laser diffraction methods is shown in Table I. The only cause attributable to the improved flavour strength of the resulting coffee beverage for Example 2 relative to example 1 is the particle size distribution, represented by median particle size and the range for 80% by weight of the coffee of the particle size according to the present invention.

Example 3 :

A serial measurement of flavour strength relative to median particle size is conducted by preparing roast and ground coffee in the same manner as in Examples 1 and 2 but grinding to a series of median particle sizes. Again the reference coffee beverage is prepared using ground coffee having a median particle size of 240 micrometers, equivalent to commercially available roast and ground coffee. Also, measurements of weight percent of brew solids are taken.

In Figure 1 the abscissa represents the evaluated range of median particle sizes which were evaluated. On the left ordinate, the weight percent of brew solids is given for Curve A which follows the expected linear increase with decreasing median particle size. The right hand ordinate shows the relative flavour strength versus the reference coffee beverage for Curve B which has surprisingly a distinct maximum between a median particle size of 195 micrometers and a median particle size of 240 micrometers which was unpredictable based on the indication from the brew solids curve.

## TABLE 1 : Particle Size Distribution

| Particle size tire, upper limit (micrometers) | Example I (weigth percent) | | Example II (weigth percent) | |
|---|---|---|---|---|
| | In Tire | cumulative | In Tire | cumulative |
| 9.00 | 0.00 | 0.00 | 0.00 | 0.00 |
| 11.00 | 0.36 | 0.36 | 0.55 | 0.55 |
| 13.00 | 0.57 | 0.93 | 0.77 | 1.32 |
| 15.00 | 0.72 | 1.65 | 0.93 | 2.24 |
| 18.00 | 1.26 | 2.92 | 1.56 | 3.80 |
| 22.00 | 1.88 | 4.80 | 2.24 | 6.04 |
| 26.00 | 1.99 | 6.79 | 2.28 | 8.32 |
| 31.00 | 2.47 | 9.26 | 2.74 | 11.06 |
| 37.00 | 2.78 | 12.04 | 2.97 | 14.03 |
| 43.00 | 2.46 | 14.51 | 2.54 | 16.57 |
| 50.00 | 2.43 | 16.94 | 2.43 | 19.00 |
| 60.00 | 2.75 | 19.68 | 2.70 | 21.69 |
| 75.00 | 2.97 | 22.65 | 2.92 | 24.62 |
| 90.00 | 2.11 | 24.76 | 2.14 | 26.76 |
| 105.00 | 1.71 | 26.47 | 1.84 | 28.60 |
| 125.00 | 2.14 | 28.62 | 2.54 | 31.14 |
| 150.00 | 2.98 | 31.60 | 3.94 | 35.08 |
| 180.00 | 4.68 | 36.28 | 6.38 | 41.45 |
| 210.00 | 6.25 | 42.53 | 8.08 | 49.53 |
| 250.00 | 10.16 | 52.69 | 11.93 | 61.46 |
| 300.00 | 13.12 | 65.81 | 13.69 | 75.15 |
| 360.00 | 13.08 | 78.89 | 12.02 | 87.18 |
| 430.00 | 9.93 | 88.82 | 7.80 | 94.98 |
| 510.00 | 5.81 | 94.63 | 3.58 | 98.56 |
| 610.00 | 2.97 | 97.60 | 1.05 | 99.60 |
| 730.00 | 1.49 | 99.09 | 0.16 | 99.76 |
| 970.00 | 0.91 | 100.00 | 0.24 | 100.00 |
| 1030.00 | 0.00 | 100.00 | 0.00 | 100.00 |
| median particle size | 239.4 micrometers | | 211.6 micrometers | |
| particle size for lower 10% | 32.6 micrometers | | 29.1 micrometers | |
| partilce size for lower 90% | 446.3 micrometers | | 385.3 micrometers | |

## Claims

1. Roast and ground coffee, characterized in that said coffee has a median particle size in the range of 195 to 240 micrometers.

2. Roast and ground coffee according to claim 1 wherein said coffee has a median particle size in the range of 200 to 240 micrometers.

3. Roast and ground coffee according to claim 1 wherein said coffee has a median particle size in the range of 205 to 215 micrometers.

4. Roast and ground coffee according to any of the preceding claims wherein said coffee has a median particle size in the range of 205 to 215 micrometers and at least 80% by weight of said coffee has a particle size in the range of 25 to 395 micrometers.

5. Roast and ground coffee according to any of the preceding claims wherein said coffee is particularly suitable for use in an espresso machine and has a Hunter "L" colour in the range of 12 to 20.

6. Use of the roast and ground coffee of claim 1 characterized in that said roast and ground coffee is used in a domestic automatic espresso machine.

FIGURE  1

Median Particle Size

(micrometers)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 235 737 (LINDE A.G.)<br>* page 3, line 9 - line 27; claim 1 *<br>* page 4, line 19 - line 22 *<br>--- | 1,2 | A23F5/08 |
| A | GB-A-2 027 662 (C. WIELAND)<br>* page 1, line 65 - line 67; claim 1 *<br>--- | 1-4 | |
| A | GB-A-1 186 305 (COFFEE INSTANTS CO)<br>* example 1 *<br>--- | 1-4 | |
| A | LEBENSMITTEL, WISSENSCHAFT UND TECHNOLOGIE vol. 23, 1990,<br>pages 386 - 389 'Influence of some processing conditions on solid-liquid extraction of coffee'<br>* page 387, column 2 - page 388, column 1 *<br>--- | 1 | |
| A | M. SIVETZ ET AL. 'Coffee technology' , AVI PUBLISHING CO , WESTPORT CONNECTICUT USA<br>* page 40, paragraph 2 *<br>----- | 5,6 | TECHNICAL FIELDS SEARCHED (Int. Cl.5 )<br><br>A23F |

The present search report has been drawn up for all claims

| Place of search | Date of completion of the search | Examiner |
|---|---|---|
| THE HAGUE | 14 OCTOBER 1992 | DESMEDT G.R.A. |